# EUROPEAN PATENT APPLICATION

(11) **EP 4 834 609 A1**
(43) Date of publication of application: **04.11.2026**
(21) Application number: 24912139.3
(22) Date of filing: 25.11.2024
(51) Int. Cl.: B60K 1/00

(54) **ELECTRIC TRACTOR**

(30) Priority: 27.12.2023 JP 2023221637
(71) Applicant: KUBOTA CORPORATION, Osaka-shi, Osaka 530-0011 (JP)
(72) Inventor: YASUMURA Koki, Sakai-shi, Osaka 590-0908 (JP); MATSUMOTO Takaaki, Sakai-shi, Osaka 590-0908 (JP); IIZUKA Hiroaki, Sakai-shi, Osaka 590-0908 (JP); IMOTO Masahiro, Sakai-shi, Osaka 590-0908 (JP); SUEHARA Atsushi, Sakai-shi, Osaka 590-0908 (JP)
(74) Representative: Müller-Boré & Partner Patentanwälte PartG mbB
(86) International application number: PCT/JP2024/041609
(87) International publication number: WO 2025/142247

(57) **Abstract**

An electric tractor has a first electric motor 11 that generates power for traveling and a second electric motor 12 that generates power for operating a work apparatus, the first electric motor 11 and the second electric motor 12 being provided side by side in a left-right direction. A hydraulic pump 61 that supplies hydraulic fluid to the work apparatus is provided on the same side as the second electric motor 12 in a plan view with respect to a virtual line L4 passing along the front-rear direction between the first electric motor 11 and the second electric motor 12, and is driven by the second electric motor 12.

## Description

### Technical Field

The present invention relates to an overall configuration of an electric tractor.

### Background Art

Some tractors, as disclosed in Patent Document 1, are provided with an engine serving as a motive power source.

In Patent Document 1, a driving section to be occupied by an operator is provided on a body provided with front wheels and rear wheels. An engine is provided frontward of the driving section, a front axle case to which the front wheels are attached is provided below the engine, and a transmission case to which the rear wheels are attached is provided below the driving section. A transmission shaft is connected between the engine and the transmission case, and a front-wheel transmission shaft is connected between the transmission case and the front axle case.

In Patent Document 1, the motive power of the engine is transmitted via a transmission shaft to a travel transmission inside the transmission case, and then transmitted from the transmission to the rear wheels. Motive power branched from the transmission is transmitted to the front wheels via the front-wheel transmission shaft.

Inside the transmission case, the motive power of the engine is branched and transmitted to a PTO shaft, and the motive power of the PTO shaft is transmitted to a work apparatus equipped on the tractor. The motive power of the engine drives a hydraulic pump, and hydraulic fluid of the hydraulic pump is supplied to a hydraulic device included on the tractor and a hydraulically operated work apparatus equipped on the tractor.

### Prior Art Document

### Patent Document

Patent Document 1: JP 2011-88523A

### Disclosure of the Invention

### Problem to be Solved by the Invention

For tractors, electric tractors have been proposed that are equipped with an electric motor that generates motive power for traveling, and an electric motor that generates motive power and hydraulic pressure for operating an equipped work apparatus.

The present invention aims to provide a configuration for an electric tractor that enables suitable operation of travel and work apparatuses.

### Means for Solving Problem

The electric tractor of the present invention includes: a first electric motor configured to generate motive power for traveling; and a second electric motor configured to generate motive power for operating an equipped work apparatus, in which the first electric motor and the second electric motor are provided side by side along a left-right direction, the electric tractor further includes a hydraulic pump configured to supply hydraulic fluid to the work apparatus, and the hydraulic pump is provided on the same side as the second electric motor in a plan view, with respect to a virtual line passing in a front-rear direction between the first electric motor and the second electric motor, and is driven by the second electric motor.

According to the present invention, the electric tractor travels with the motive power of the first electric motor, and the work apparatus operates with the motive power of the second electric motor. By separately providing the first electric motor for traveling and the second electric motor for operating the work apparatus, the work apparatus can be operated with less influence from fluctuations in the load during traveling, and the electric tractor can travel with less influence from fluctuations in the load applied to the work apparatus.

According to the present invention, the first electric motor and the second electric motor are provided side by side along the left-right direction, whereby the first electric motor and the second electric motor are provided at approximately the same position in the front-rear direction and at approximately the same height in the up-down direction. For this reason, a favorable weight balance is obtained in the electric tractor, and the travel performance of the electric tractor is improved.

According to the present invention, if the hydraulic pump is included and the hydraulically operated work apparatus is equipped on the electric tractor, the hydraulic fluid of the hydraulic pump is supplied to the work apparatus.

According to the present invention, since the hydraulic pump is driven by the second electric motor for operating the work apparatus, the electric tractor can travel with less influence from fluctuations in the drive load of the hydraulic pump.

According to the present invention, the hydraulic pump is provided on the same side as the second electric motor in a plan view, with respect to a virtual line passing in the front-rear direction between the first electric motor and the second electric motor, and the hydraulic pump is provided near the second electric motor. For this reason, the drive structure for driving the hydraulic pump by the second electric motor can be made compact.

In the present invention, it is preferable that a control valve is included, to which the hydraulic fluid of the hydraulic pump is supplied, the control valve being configured to supply and discharge the hydraulic fluid to and from the equipped work apparatus, and the control valve is provided on the same side as the second electric motor in a plan view with respect to the virtual line.

According to the present invention, the hydraulic fluid of the hydraulic pump is supplied to the control valve, and the control valve controls the supply and discharge of the hydraulic fluid to and from the work apparatus, whereby the work apparatus operates.

In this case, the control valve is provided on the same side as the second electric motor in a plan view, with respect to a virtual line passing in the front-rear direction between the first and second electric motors, and the control valve is provided near the hydraulic pump. For this reason, the oil passage connecting the hydraulic pump and the control valve can be made compact.

In the present invention, it is preferable that a driving section configured to be occupied by an operator and a manual operation tool that is operable by an operator in the driving section and is configured to operate the control valve are included, and the manual operation tool is provided on the same side as the second electric motor in a plan view with respect to a center portion in the left-right direction of the driving section.

According to the present invention, an operator in the driving section can operate the control valve and operate the work apparatus by operating the manual operation tool.

In this case, the manual operation tool is provided on the same side as the second electric motor in a plan view, with respect to the center portion in the left-right direction of the driving section, and the manual operation tool is provided near the control valve. For this reason, the wiring and coordination mechanisms connected between the manual operation tool and the control valve can be made compact.

In the present invention, it is preferable that the manual operation tool is provided on a right side in a plan view with respect to the center portion in the left-right direction of the driving section, and the second electric motor and the hydraulic pump are provided on the right side in a plan view with respect to the virtual line.

Since many people are right-handed in general, the manual operation tool is often provided on the right side in a plan view, with respect to the center portion in the left-right direction of the driving section.

According to the present invention, the second electric motor and the hydraulic pump are provided on the right side in a plan view, with respect to a virtual line passing in the front-rear direction between the first electric motor and the second electric motor, which is a suitable configuration for an electric tractor in which the manual operation tool is provided on the right side in a plan view, with respect to the center portion in the left-right direction of the driving section.

In the present invention, it is preferable that a transmission case is included, inside of which a transmission mechanism is provided, motive power of the first electric motor and the second electric motor being transmitted by the transmission mechanism, the transmission case is provided rearward of the first electric motor and the second electric motor, and the hydraulic pump is provided laterally outward of a right portion or a left portion of the transmission case on the same side as the second electric motor.

According to the present invention, the transmission case is provided rearward of the first electric motor and the second electric motor, and the hydraulic pump is provided laterally outward of the right portion or the left portion of the transmission case on the same side as the second electric motor, whereby the hydraulic pump is provided compactly.

In the present invention, it is preferable that a housing frame is included, which houses the first electric motor and the second electric motor and has a width in the left-right direction that is larger than a width in the left-right direction of the transmission case, the transmission case is coupled to a rear portion of the housing frame, and the hydraulic pump is provided rearward of a right part or a left part of the rear portion of the housing frame on the same side as the second electric motor.

According to the present invention, the housing frame is included, which houses the first electric motor and the second electric motor, and the transmission case is coupled to the rear portion of the housing frame.

The housing frame is for housing the first electric motor and the second electric motor, which are heavy components, and therefore the housing frame is configured to have sufficient strength. The transmission case is also similarly configured to have sufficient strength.

According to the present invention, the transmission case is coupled to the rear portion of the housing frame, and the overall rigidity of the electric tractor is improved by coupling the housing frame, which has sufficient strength, and the transmission case, which also has sufficient strength, to each other.

According to the present invention, the housing frame houses the first electric motor and the second electric motor, which are provided side by side along the left-right direction, and therefore the length of the housing frame in the front-rear direction is suppressed.

In contrast, the width of the housing frame in the left-right direction becomes larger, and is larger than the width of the transmission case in the left-right direction.

According to the present invention, the hydraulic pump is provided laterally outward of the right portion or the left portion of the transmission case on the same side as the second electric motor, and is provided rearward of the right part or the left part of the rear portion of the housing frame on the same side as the second electric motor.

As a result, the hydraulic pump is provided in the region between the right part (left part) of the rear portion of the housing frame and the right portion (left portion) of the transmission case. For this reason, the hydraulic pump is provided compactly.

In the present invention, it is preferable that a control valve is included, to which the hydraulic fluid of the hydraulic pump is supplied, the control valve being configured to supply and discharge the hydraulic fluid to and from the equipped work apparatus, and the control valve is provided laterally outward of the right portion or the left portion of the housing frame on the same side as the second electric motor.

According to the present invention, the hydraulic fluid of the hydraulic pump is supplied to the control valve, and the control valve controls the supply and discharge of the hydraulic fluid to and from the work apparatus, whereby the work apparatus operates.

In this case, the control valve is provided laterally outward of the right portion or the left portion of the housing frame on the same side as the second electric motor, and is provided near the hydraulic pump. For this reason, the oil passage connecting the hydraulic pump and the control valve can be made compact.

In the present invention, it is preferable that a filter is included, which is provided laterally outward of the right portion or the left portion of the transmission case on the side opposite to the second electric motor, and to which lubricating oil stored in the transmission case is supplied, and the lubricating oil stored in the transmission case is passed through the filter and supplied to the hydraulic pump as the hydraulic fluid.

According to the present invention, the lubricating oil stored in the transmission case is passed through the filter and supplied to the hydraulic pump as the hydraulic fluid.

In this case, the hydraulic pump is provided laterally outward of the right portion or the left portion of the transmission case on the same side as the second electric motor. In addition, the filter is provided laterally outward of the right portion or the left portion of the transmission case on the side opposite to the second electric motor.

As a result, the hydraulic pump and the filter are provided separately on the right side and left side of the transmission case, and the hydraulic pump and the filter are thus provided compactly.

In the present invention, it is preferable that a filter is included, which is provided laterally outward of the right portion or the left portion of the transmission case on the side opposite to the second electric motor, and is provided rearward of the right part or the left part of the rear portion of the housing frame on the side opposite to the second electric motor, and to which lubricating oil stored in the transmission case is supplied, and the lubricating oil stored in the transmission case is passed through the filter and supplied to the hydraulic pump as the hydraulic fluid.

According to the present invention, the lubricating oil stored in the transmission case is passed through the filter and supplied to the hydraulic pump as the hydraulic fluid.

In this case, the hydraulic pump is provided laterally outward of the right portion or the left portion of the transmission case on the same side as the second electric motor, and is provided rearward of the right part or the left part of the rear portion of the housing frame on the same side as the second electric motor. In addition, the filter is provided laterally outward of the right portion or the left portion of the transmission case on the side opposite to the second electric motor, and is provided rearward of the right part or the left part of the rear portion of the housing frame on the side opposite to the second electric motor.

As a result, the hydraulic pump and the filter are provided separately on the right side and left side of the transmission case, and the hydraulic pump and the filter are thus provided compactly.

The hydraulic pump is provided in the region between the right part (left part) of the rear portion of the housing frame and the right portion (left portion) of the transmission case, and the filter is provided in the region between the left part (right part) of the rear portion of the housing frame and the left portion (right portion) of the transmission case. For this reason, the hydraulic pump and the filter are provided compactly.

In the present invention, it is preferable that an oil supply passage is included, which is connected between the filter and the hydraulic pump and is configured to supply the lubricating oil stored in the transmission case to the hydraulic pump as the hydraulic fluid, and the oil supply passage is provided along the left-right direction above the transmission case.

According to the present invention, when the oil supply passage is connected between the filter and the hydraulic pump, the oil supply passage is provided along the left-right direction above the transmission case.

As a result, small stones and the like kicked up by the electric tractor during travel or the like are less likely to hit the oil supply passage, thus preventing damage to the oil supply passage.

### Brief Description of the Drawings

FIG. 1 is a right side view of an electric tractor.
FIG. 2 is a plan view of the vicinity of a front frame, a housing frame, and a transmission case.
FIG. 3 is a plan view of the housing frame.
FIG. 4 is a bottom view of the housing frame.
FIG. 5 is a front view of the housing frame.
FIG. 6 is a rear view of the housing frame.
FIG. 7 is an exploded perspective view of the housing frame.
FIG. 8 is a schematic plan view showing a transmission system inside the transmission case.
FIG. 9 is a rear view showing the transmission system inside the transmission case.
FIG. 10 is a lateral cross-sectional plan view of the vicinity of a first part of the transmission case and a rear portion of the housing frame.
FIG. 11 is a right side view showing the transmission system inside the transmission case.
FIG. 12 is a left side view showing the transmission system inside the transmission case.

### Best Mode for Carrying out the Invention

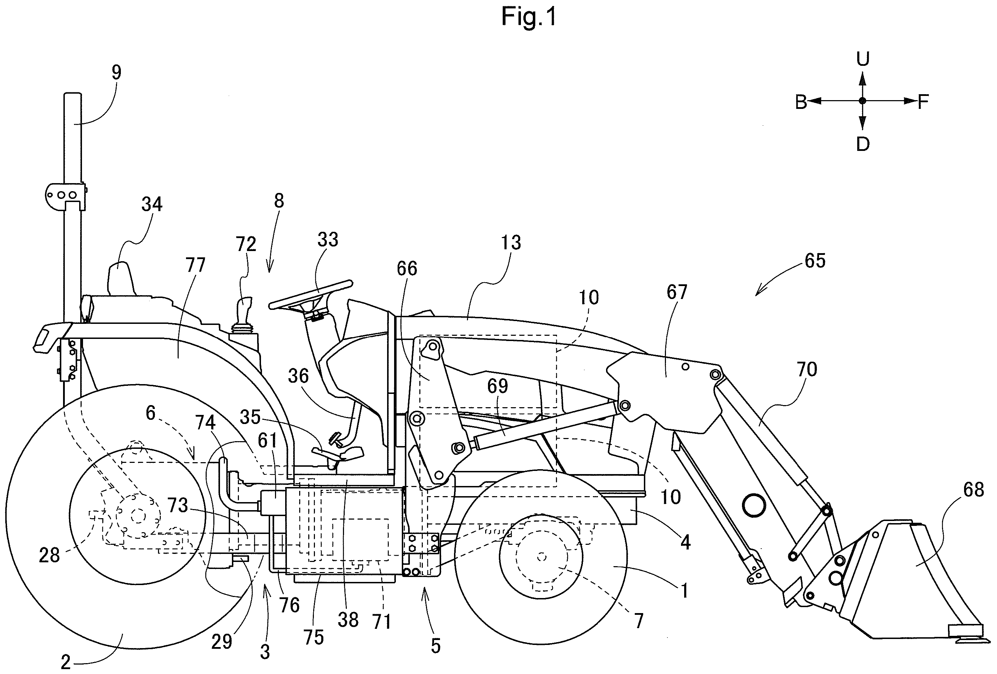

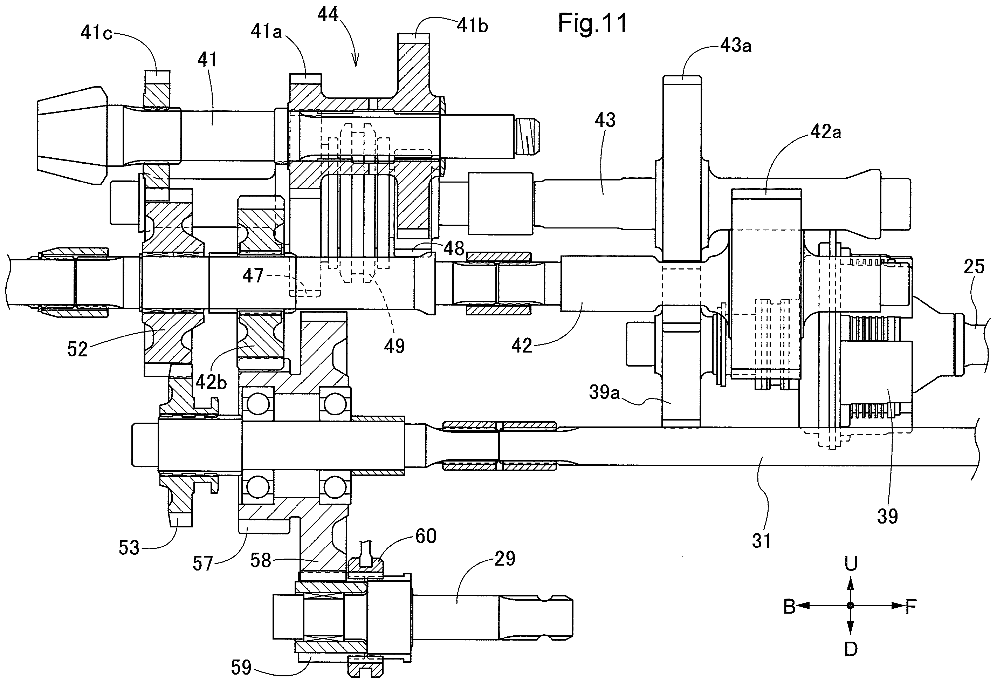

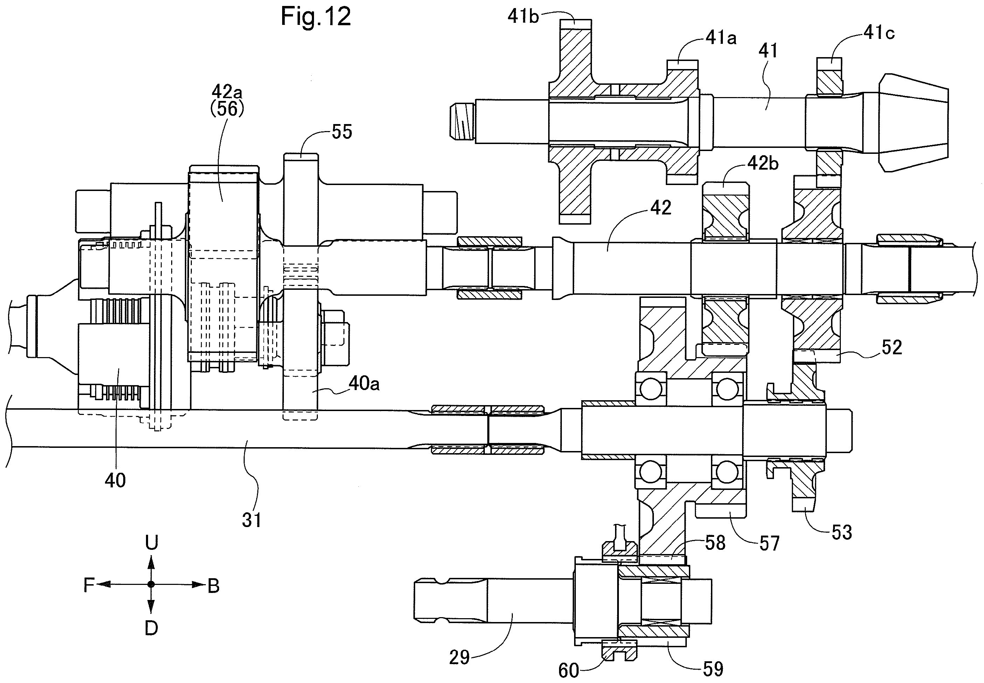

FIGS. 1 to 12 show an electric tractor, with F indicating frontward, B indicating rearward, U indicating upward, D indicating downward, R indicating rightward, and L indicating leftward in FIGS. 1 to 12.

### (Overall Configuration of Electric Tractor)

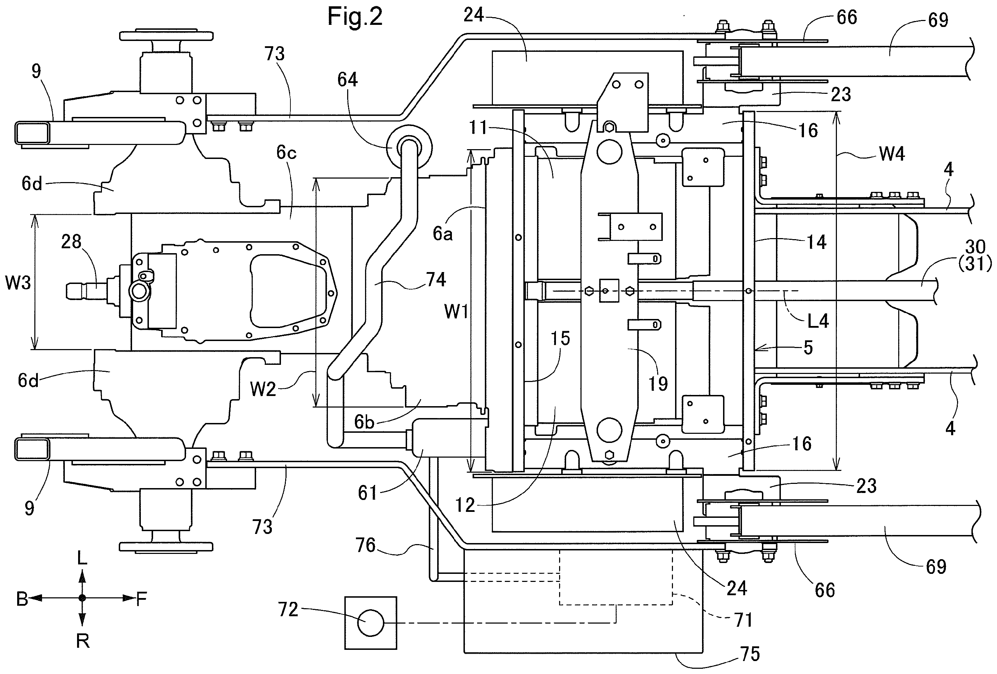

As shown in FIGS. 1 and 2, right and left front wheels 1 are provided at a front portion of a body 3, and right and left rear wheels 2 are provided at a rear portion of the body 3, with the body 3 being supported by the front wheels 1 and the rear wheels 2. In this case, the rear wheels 2 are a rear travel apparatus.

The body 3 has a front frame 4, a housing frame 5, and a transmission case 6. The front frame 4 is coupled to a front portion 14 of the housing frame 5, and the transmission case 6 is coupled to a rear portion 15 of the housing frame 5, thereby forming the body 3. The housing frame 5 houses a first electric motor 11 and a second electric motor 12, which serve as motive power sources.

A front axle case 7 is attached to the front frame 4, and the right and left front wheels 1 are attached to the front axle case 7. The right and left rear wheels 2 are attached to the transmission case 6.

A driving section 8 to be occupied by an operator is provided across the housing frame 5 and the transmission case 6. A ROPS frame 9 is attached to the transmission case 6 and extends upward, and is provided rearward of the driving section 8. A battery 10 that supplies power to the electric motors 11 and 12 is attached to the front frame 4, and a hood 13 covering the battery 10 is provided.

### (Configuration of Driving Section)

As shown in FIG. 1, the driving section 8 is provided with a steering wheel 33, a driver's seat 34, a speed change pedal 35, right and left brake pedals 36, and a floor 38.

The floor 38 is located below the driving section 8, the floor 38 is supported by the housing frame 5, and the rear portion of the driving section 8 is supported by the transmission case 6.

The steering wheel 33 for steering the front wheels 1 is provided at the front portion of the driving section 8, and the driver's seat 34 is provided at the rear portion of the driving section 8. The speed change pedal 35 is provided at the right portion of the floor 38, and the right and left brake pedals 36 are provided to the left of the steering wheel 33.

### (Configuration of Housing Frame)

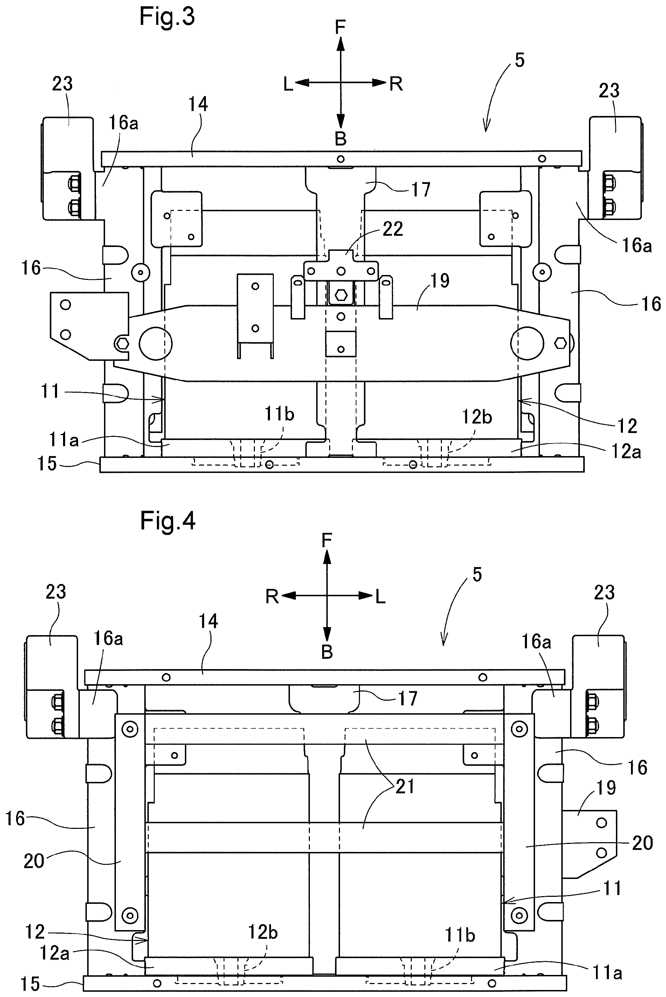

As shown in FIGS. 3 to 7, the housing frame 5 has a front portion 14, a rear portion 15, a right lateral portion 16, a left lateral portion 16, frames 17, 19, 20, and 21, and the like. In this case, the rear portion 15 of the housing frame 5 is a coupling portion. The right lateral portion 16 of the housing frame 5 is the right portion of the housing frame 5, and the left lateral portion 16 of the housing frame 5 is the left portion of the housing frame 5.

The front portion 14 and the rear portion 15 are flat plates extending along the up-down direction and the left-right direction. The right and left lateral portions 16 are flat plates extending along the up-down direction and the front-rear direction, and are slightly curved. Front parts of the lateral portions 16 are coupled to a right part and a left part of a rear surface of the front portion 14, and rear parts of the lateral portions 16 are coupled to a right part and a left part of a front surface of the rear portion 15.

The frame 17 is coupled along the front-rear direction between a central part in the left-right direction of an upper part of the rear surface of the front portion 14 and a central part in the left-right direction of an upper part of the front surface of the rear portion 15. The frame 19 is coupled along the left-right direction between the upper parts of the right and left lateral portions 16. A bracket 22 is coupled between the frame 17 and the frame 19.

The right and left frames 20 are coupled to the lower parts of the right and left lateral portions 16 along the front-rear direction. The frame 21 is coupled along the left-right direction between the right and left frames 20.

### (Configuration for Housing Electric Motors in Housing Frame)

As shown in FIGS. 3 to 7, the electric motors 11 and 12 are provided side by side along the left-right direction inside the housing frame 5 (between the front portion 14 and the rear portion 15, between the right and left lateral portions 16, and between the frames 17 and 19 and the frame 21). The electric motors 11 and 12 are identical and have the same output.

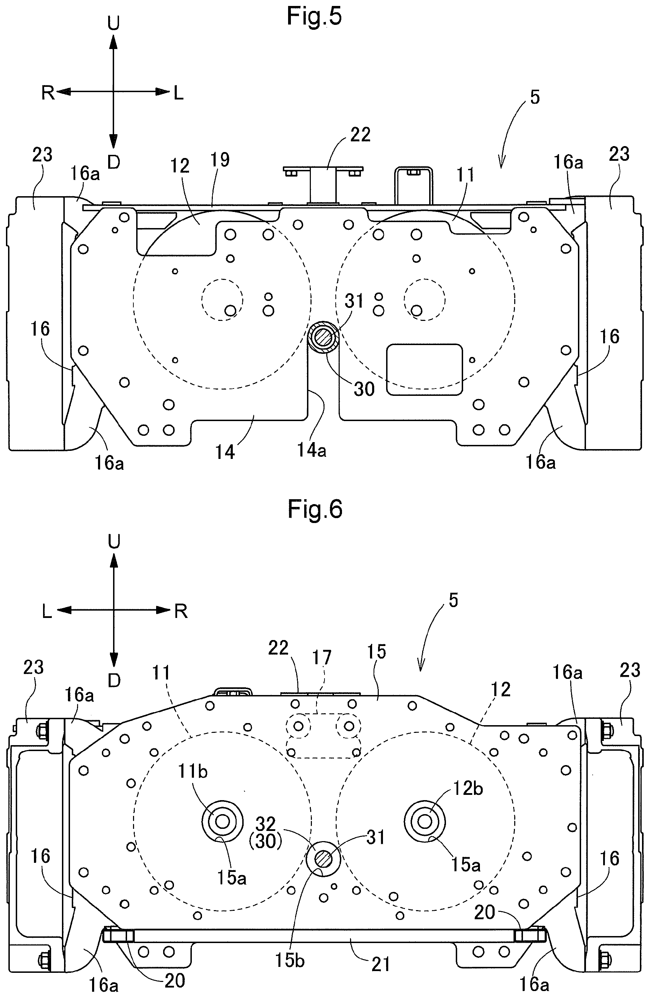

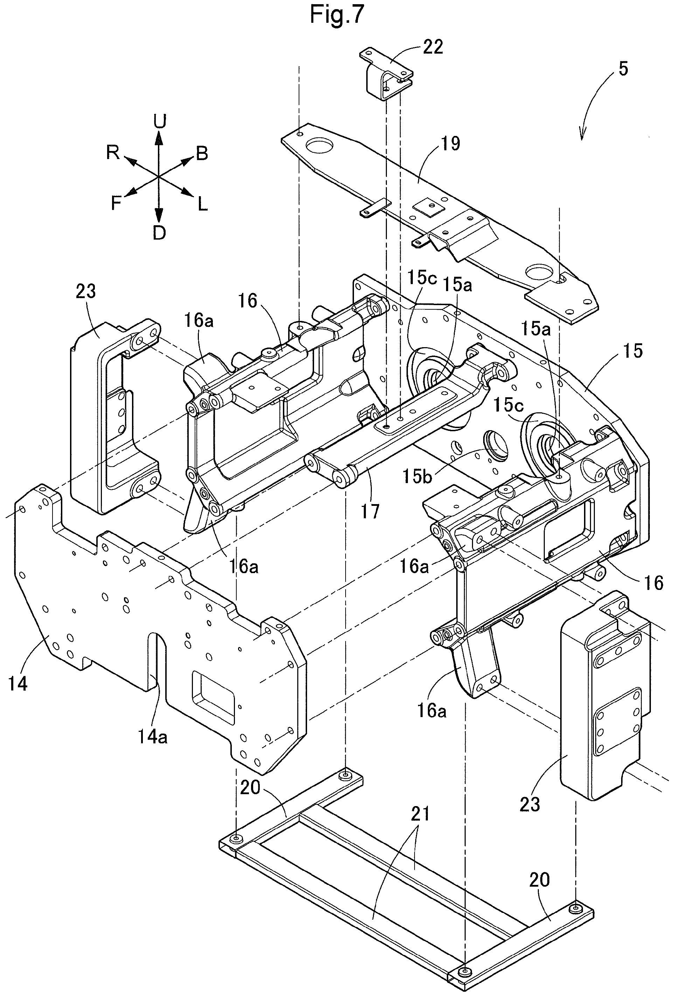

As shown in FIGS. 6 and 7, right and left openings 15a are provided in the right and left parts of the rear portion 15 of the housing frame 5, and an opening 15b is provided at a central part in the left-right direction of the rear portion 15 of the housing frame 5. A ring-shaped recess 15c is formed concentrically with the opening 15a of the rear portion 15 of the housing frame 5, in the front surface of the rear portion 15 of the housing frame 5. In this case, the opening 15b is a front-wheel transmission opening.

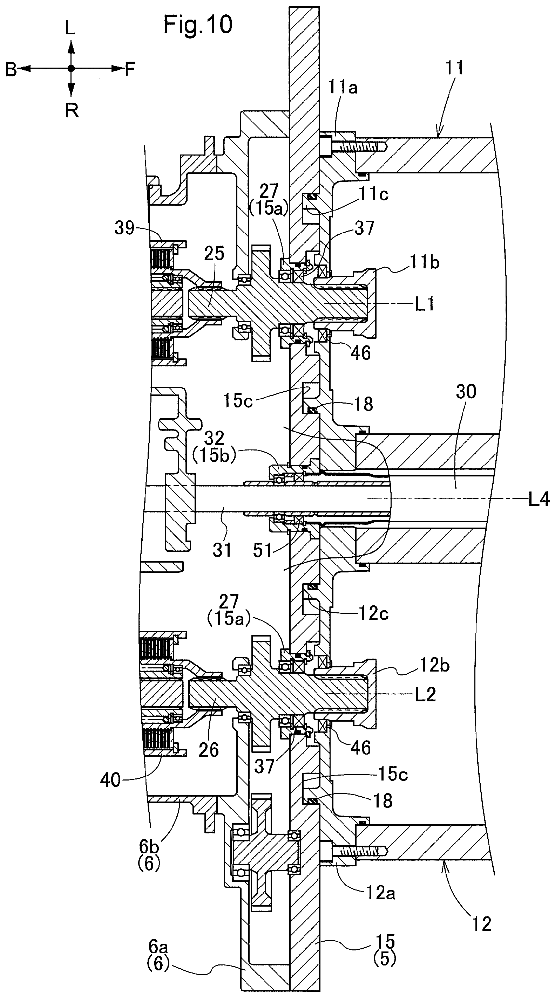

As shown in FIG. 10, flange portions 11a and 12a and output shafts 11b and 12b are provided at rear end portions of the electric motors 11 and 12. Ring-shaped protrusions 11c and 12c are formed concentrically with the output shafts 11b and 12b of the electric motors 11 and 12, on the flange portions 11a and 12a of the electric motors 11 and 12. In this case, the flange portions 11a and 12a of the electric motors 11 and 12 are the rear portions of the electric motors 11 and 12.

The protrusions 11c and 12c of the electric motors 11 and 12 are inserted into the recesses 15c of the rear portion 15 of the housing frame 5 (spigot structure). Sealing members 18 such as O-rings are provided between the protrusions 11c and 12c of the electric motors 11 and 12 and the recesses 15c of the rear portion 15 of the housing frame 5.

In the state described above, the flange portion 11a of the electric motor 11 is connected to the left part of the front surface of the rear portion 15 of the housing frame 5, and the flange portion 12a of the electric motor 12 is connected to the right part of the front surface of the rear portion 15 of the housing frame 5.

As shown in FIGS. 6 and 10, the output shafts 11b and 12b of the electric motors 11 and 12 are provided at positions facing the openings 15a of the rear portion 15 of the housing frame 5, and face rearward.

As shown in FIGS. 2 and 10, in the housing frame 5, if a virtual line L4 passing in the front-rear direction between the electric motor 11 and the electric motor 12 is envisioned, the electric motor 11 is provided to the left of the virtual line L4 in a plan view, and the electric motor 12 is provided to the right of the virtual line L4 in a plan view.

### (Configuration of Attachment Portion for Attaching Work Apparatus, and Inverter)

As shown in FIGS. 3 to 7, on the right and left lateral portions 16 of the housing frame 5, upper attachment portions 16a are inclined upward on the upper parts of the front parts of the lateral portions 16, and lower attachment portions 16a are inclined downward on the lower parts of the front parts of the lateral portions 16.

A right attachment portion 23 is coupled to the attachment portions 16a of the right lateral portion 16 of the housing frame 5, and a left attachment portion 23 is coupled to the attachment portions 16a of the left lateral portion 16 of the housing frame 5. As will be described later, a work apparatus such as a front loader apparatus 65 (see FIG. 1) is attached to the right and left attachment portions 23.

As shown in FIG. 2, right and left inverters 24 are attached to the right and left lateral portions 16 of the housing frame 5, and are provided rearward of the attachment portions 23.

Power from the battery 10 is supplied to the left inverter 24, and based on an operation of the speed change pedal 35 (see FIG. 1), the left inverter 24 converts the DC power from the battery 10 into AC power and supplies the result to the electric motor 11, causing the electric motor 11 to operate in both forward and reverse directions.

Power from the battery 10 is supplied to the right inverter 24, and the right inverter 24 converts the DC power from the battery 10 to AC power and supplies the result to the electric motor 12, whereby the electric motor 12 operates. As described later, the electric motor 12 drives the hydraulic pump 61, and therefore the electric motor 12 operates in the forward direction and does not operate in the reverse direction.

### (Overall Configuration of Transmission Case)

As shown in FIG. 2, the transmission case 6 includes a first part 6a, a second part 6b, a third part 6c, right and left rear axle cases 6d, and the like. The rear axle cases 6d are provided on the third part 6c, and the right and left rear wheels 2 are attached to the rear axle cases 6d. In this case, the first part 6a and the second part 6b of the transmission case 6 are the front portion of the transmission case 6, and the third part 6c of the transmission case 6 is the rear portion of the transmission case 6.

The first part 6a of the transmission case 6 is coupled to the rear surface of the rear portion 15 of the housing frame 5, and the transmission case 6 is provided rearward of the electric motors 11 and 12.

The first part 6a of the transmission case 6 is open toward the front, and the first part 6a of the transmission case 6 is coupled to the rear surface of the rear portion 15 of the housing frame 5, whereby the first part 6a of the transmission case 6 is closed by the rear portion 15 of the housing frame 5.

A width W4 in the left-right direction of the housing frame 5 is larger than widths W1, W2, and W3 in the left-right direction of the transmission case 6.

The width W1 in the left-right direction of the first part 6a of the transmission case 6 is larger than the width W2 in the left-right direction of the second part 6b of the transmission case 6. The width W2 in the left-right direction of the second part 6b of the transmission case 6 is larger than the width W3 in the left-right direction of the third part 6c of the transmission case 6.

### (Overview of Internal Configuration of Transmission Case)

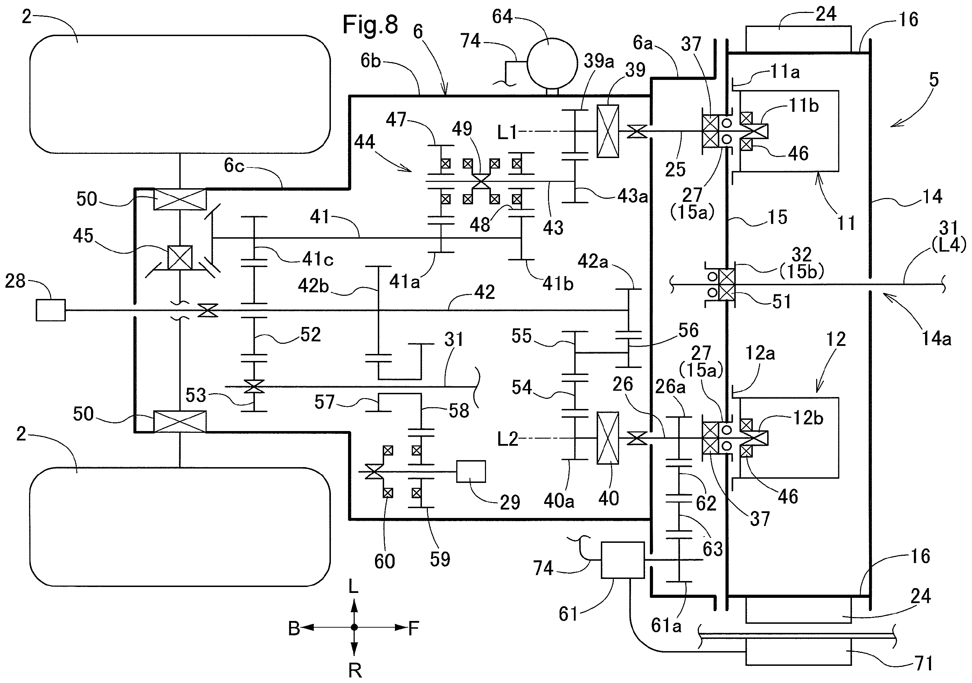

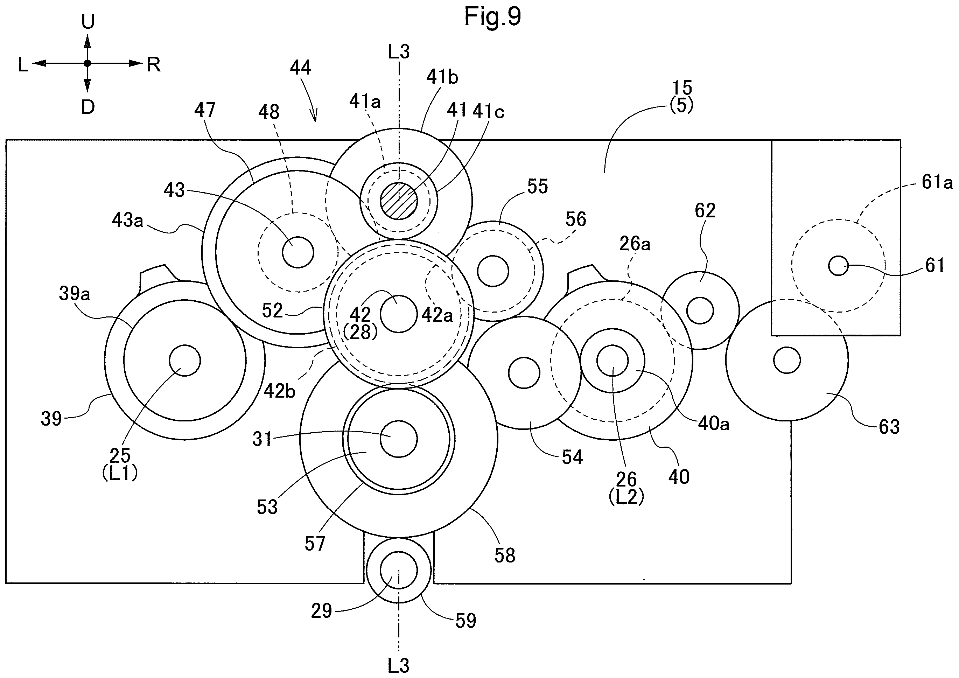

As shown in FIGS. 8 and 9, lubricating oil is stored inside the transmission case 6.

A hydraulic multi-plate travel clutch 39 and a hydraulic multi-plate PTO clutch 40 are provided on the right part and left part of the second part 6b of the transmission case 6.

A travel transmission shaft 41, a PTO transmission shaft 42, and a front-wheel transmission shaft 31 are provided along the front-rear direction at a center part in the left-right direction of the transmission case 6, spanning across the second part 6b and the third part 6c of the transmission case 6.

A travel relay shaft 43 is provided along the front-rear direction in the left portion of the second part 6b of the transmission case 6. A gear-shift-type transmission 44 is provided in the left portion of the second part 6b of the transmission case 6. A rear-wheel differential apparatus 45 is provided in the third part 6c of the transmission case 6.

A PTO shaft 28 (see FIGS. 1 and 2) is provided facing rearward at the rear end portion of the third part 6c of the transmission case 6. A mid-PTO shaft 29 (see FIG. 1) is provided facing frontward at the bottom portion of the third part 6c of the transmission case 6.

As will be described later, the motive power of the electric motor 11 is transmitted to a travel clutch 39, and then from the travel clutch 39 to the rear wheels 2 via the travel relay shaft 43, the transmission 44, the travel transmission shaft 41, and the rear-wheel differential apparatus 45. The motive power branched from between the transmission 44 and the rear-wheel differential apparatus 45 is transmitted to the front-wheel transmission shaft 31, and then transmitted from the front-wheel transmission shaft 31 to the front wheels 1.

The motive power from the electric motor 12 is transmitted to the PTO clutch 40, and then from the PTO clutch 40 to the PTO shaft 28 via the PTO transmission shaft 42. The motive power branched from the PTO transmission shaft 42 is transmitted to the mid-PTO shaft 29.

### (Configuration for Coupling Electric Motor, Travel Clutch, and PTO Clutch)

As shown in FIGS. 8, 9, and 10, an input shaft 25 is coupled to the travel clutch 39, an input shaft 26 is coupled to the PTO clutch 40, and the input shafts 25 and 26 extend frontward from the first part 6a of the transmission case 6.

The input shaft 25 passes through the left opening 15a of the rear portion 15 of the housing frame 5 and is coupled to the output shaft 11b of the electric motor 11 by a spline structure. The input shaft 26 passes through the right opening 15a of the rear portion 15 of the housing frame 5 and is coupled to the output shaft 12b of the electric motor 12 by a spline structure.

As a result, the motive power of the output shaft 11b of the electric motor 11 is transmitted to the travel clutch 39 via the input shaft 25. The motive power of the output shaft 12b of the electric motor 12 is transmitted to the PTO clutch 40 via the input shaft 26.

Bearing portions 27 each having a bearing are provided in the right and left openings 15a of the rear portion 15 of the housing frame 5. The input shafts 25 and 26 pass through the bearing portions 27 and are supported by the bearing portions 27, and thus are supported by the rear portion 15 of the housing frame 5 via the bearing portions 27.

Sealing members 37 are provided on the bearing portions 27, and sealing members 46 are provided on the output shafts 11b and 12b of the electric motors 11 and 12.

As a result, even if the lubricating oil of the transmission case 6 tries to enter the space between the recess 15c of the rear portion 15 of the housing frame 5 and the protrusions 11c and 12c of the electric motors 11 and 12, through the openings 15a and the bearing portions 27 of the rear portion 15 of the housing frame 5, it will be prevented by the sealing members 37.

Even if the lubricating oil of the transmission case 6 enters the aforementioned space, the sealing members 18 prevent the lubricating oil of the transmission case 6 from leaving that space, and the sealing members 46 prevent it from entering the interiors of the electric motors 11 and 12.

### (Configuration of Transmission System for Transmission to Rear Wheels in Transmission Case) - 1

As shown in FIGS. 8 and 9, the travel transmission shaft 41, the PTO transmission shaft 42, the front-wheel transmission shaft 31, and the mid-PTO shaft 29 are provided side by side in the up-down direction along a virtual line L3 set along the vertical direction in the center portion in the left-right direction of the transmission case 6.

The travel transmission shaft 41 is provided at the highest position out of the travel transmission shaft 41, the PTO transmission shaft 42, the front-wheel transmission shaft 31, and the mid-PTO shaft 29. The PTO transmission shaft 42 is provided below the travel transmission shaft 41, the front-wheel transmission shaft 31 is provided below the PTO transmission shaft 42, and the mid-PTO shaft 29 is provided below the front-wheel transmission shaft 31.

A virtual line L1 extending rearward from the output shaft 11b (input shaft 25) of the electric motor 11 is envisioned, and a virtual line L2 extending rearward from the output shaft 12b (input shaft 26) of the electric motor 12 is envisioned. The travel transmission shaft 41, the PTO transmission shaft 42, the front-wheel transmission shaft 31, and the mid-PTO shaft 29 are provided between the virtual lines L1 and L2 in a plan view (rear view). In this case, the virtual line L1 is a first virtual line, and the virtual line L2 is a second virtual line.

The travel relay shaft 43 is provided at a height between the travel transmission shaft 41 and the PTO transmission shaft 42, between the virtual line L1 and the virtual line L2 in a plan view (rear view), and between the virtual line L1 and the travel transmission shaft 41 in a plan view (rear view).

### (Configuration of Transmission System for Transmission to Rear Wheels in Transmission Case) - 2

As shown in FIGS. 8, 9, and 11, a transmission gear 39a of the travel clutch 39 and a transmission gear 43a coupled to the travel relay shaft 43 engage with each other. The motive power of the travel clutch 39 is transmitted to the center in the left-right direction of the transmission case 6 by the transmission gear 39a of the travel clutch 39 and the transmission gear 43a of the travel relay shaft 43, and then transmitted to the travel relay shaft 43. In this case, the transmission gear 39a of the travel clutch 39 and the transmission gear 43a of the travel relay shaft 43 are a first transmission mechanism.

The transmission 44 is provided across the travel relay shaft 43 and the travel transmission shaft 41. In the transmission 44, a high-speed gear 47 rotatably attached to the travel relay shaft 43 engages with a transmission gear 41a coupled to the travel transmission shaft 41, and a low-speed gear 48 rotatably attached to the travel relay shaft 43 engages with a transmission gear 41b coupled to the travel transmission shaft 41. A shift member 49 is attached to the travel relay shaft 43 by a spline structure so as to be able to rotate and slide integrally.

In the transmission 44, when the shift member 49 is engaged with the high-speed gear 47, the motive power of the travel relay shaft 43 is transmitted to the travel transmission shaft 41 at high speed via the high-speed gear 47 and the transmission gear 41a of the travel transmission shaft 41. When the shift member 49 is engaged with the low-speed gear 48, the motive power of the travel relay shaft 43 is transmitted to the travel transmission shaft 41 at a low speed via the low-speed gear 48 and the transmission gear 41b of the travel transmission shaft 41.

As a result, the motive power from the output shaft 11b of the electric motor 11 is transmitted to the rear wheels 2 via the input shaft 25, the travel clutch 39, the travel relay shaft 43, the transmission 44, the travel transmission shaft 41, and the rear-wheel differential apparatus 45. Based on the operation of the speed change pedal 35 (see FIG. 1), the electric motor 11 operates in forward and reverse directions at continuously variable speeds, and the electric tractor moves forward (forward operation of the electric motor 11) and backward (reverse operation of the electric motor 11).

### (Brake Configuration)

As shown in FIG. 8, a right brake 50 capable of braking the right rear wheel 2 and left and right brakes 50 capable of braking the left rear wheel 2 are provided in the third part 6c of the transmission case 6.

The right brake 50 and the right brake pedal 36 (see FIG. 1) are connected via a right coordination mechanism (not shown). The left brake 50 and the left brake pedal 36 (see FIG. 1) are connected via a left coordination mechanism (not shown).

When the operator in the driving section 8 steers the front wheels 1 to the right (left) with use of the steering wheel 33, stepping on the right (left) brake pedal 36 applies braking to the right (left) rear wheels 2, allowing for a tight turn to the right (left).

When the electric tractor is to stop from a traveling state, or the like, in response to the operator in the driving section 8 stepping on the right and left brake pedals 36 to apply braking to the right and left rear wheels 2, it is detected that a stepping operation was performed on the right and left brake pedals 36, and the travel clutch 39 is disengaged.

During maintenance work or the like, the operator can operate and stop the electric motor 11 while keeping the travel clutch 39 in the disengaged state.

### (Configuration of Transmission System for Transmission to Front Wheels in Transmission Case) - 1

As shown in FIGS. 2, 8, and 10, a pipe member 30 is connected along the front-rear direction between the rear portion 15 of the housing frame 5 and the front axle case 7. The front-wheel transmission shaft 31 extends frontward from inside the third part 6c of the transmission case 6, passes through the inside of the pipe member 30, and is connected to the front-wheel differential apparatus (not shown) of the front axle case 7.

As shown in FIGS. 5 and 7, in the housing frame 5, a recess 14a that is open downward and faces upward is provided in the central part in the left-right direction of the lower part of the front portion 14.

As shown in FIGS. 5, 6, 8, and 10, in the housing frame 5, the pipe member 30 and the front-wheel transmission shaft 31 are provided in the recess 14a of the front portion 14 of the housing frame 5, and the front-wheel transmission shaft 31 is provided in the opening 15b of the rear portion 15 of the housing frame 5. The pipe member 30 and the front-wheel transmission shaft 31 are provided at the position of a virtual line L4 in a plan view.

A bearing portion 32 having a bearing is provided in the opening 15b of the rear portion 15 of the housing frame 5. The front-wheel transmission shaft 31 passes through the bearing portion 32 and is supported by the bearing portion 32, and thus is supported on the rear portion 15 of the housing frame 5 via the bearing portion 32. The rear end portion of the pipe member 30 is attached to the bearing portion 32. In this case, the bearing portion 32 is the front-wheel transmission bearing portion.

The sealing member 51 is provided on the bearing portion 32. As a result, even if the lubricating oil of the transmission case 6 tries to enter the interior of the pipe member 30 through the opening 15b and the bearing portion 32 of the rear portion 15 of the housing frame 5, it is prevented by the sealing member 51. Even if the lubricating oil of the transmission case 6 enters the interior of the pipe member 30, the lubricating oil of the transmission case 6 cannot leave the interior of the pipe member 30. In this case, the sealing member 51 is the front-wheel transmission sealing member.

The pipe member 30 and the front-wheel transmission shaft 31 are provided between the output shaft 11b of the electric motor 11 and the output shaft 12b of the electric motor 12 in a plan view, and are provided in the center in the left-right direction of the housing frame 5, directly below the frame 17 of the housing frame 5 (see FIGS. 3 to 7).

As shown in FIGS. 5 and 6, the pipe member 30 and the front-wheel transmission shaft 31 are provided at a height that overlaps with the electric motors 11 and 12 in a side view.

Specifically, the pipe member 30 and the front-wheel transmission shaft 31 are provided between the output shafts 11b and 12b of the electric motors 11 and 12 and the lower end portions of the electric motors 11 and 12 in a side view, and are provided above the frame 21 of the housing frame 5.

### (Configuration of Transmission System for Transmission to Front Wheels in Transmission Case) - 2

As shown in FIGS. 8, 9, 11, and 12, a travel relay gear 52 is rotatably attached to the PTO transmission shaft 42, and a transmission gear 41c coupled to the travel transmission shaft 41 engages with the travel relay gear 52.

The front-wheel transmission shaft 31 is attached in such a manner that a switching gear 53 can rotate and slide integrally with the front-wheel transmission shaft 31. The switching gear 53 can be slid to an engagement position of engaging with the travel relay gear 52 and to a disengaged position away from the travel relay gear 52.

In response to the switching gear 53 being operated to the engagement position of engaging with the travel relay gear 52, the motive power from the travel transmission shaft 41 is transmitted to the front-wheel transmission shaft 31 via the transmission gear 41c of the travel transmission shaft 41, the travel relay gear 52, and the switching gear 53, and then transmitted from the front-wheel transmission shaft 31 to the front wheels 1. This state is a four-wheel drive state in which the front wheels 1 and rear wheels 2 are driven.

In response to the switching gear 53 being operated to the disengaged position away from the travel relay gear 52, the motive power from the travel transmission shaft 41 is not transmitted to the front-wheel transmission shaft 31, and the front wheel 1 is not driven. This state is a rear two-wheel drive state where the rear wheels 2 are driven.

In this case, the input shaft 25, the travel clutch 39, the travel relay shaft 43, the transmission 44, the travel transmission shaft 41 and the rear-wheel differential apparatus 45, the travel relay gear 52, the switching gear 53, the front-wheel transmission shaft 31, and the like are a transmission mechanism for a travel system to the front wheels 1 and rear wheels 2.

### (Configuration of Transmission System for Transmission to PTO Shaft and Mid-PTO Shaft in Transmission Case) - 1

As shown in FIGS. 8, 9, and 12, transmission gears 54, 55, and 56 are provided at a height between the travel transmission shaft 41 and the input shaft 26, and are provided between the virtual line L1 and the virtual line L2 in a plan view (rear view), and between the virtual line L2 and the PTO transmission shaft 42 (travel transmission shaft 41) in a plan view (rear view).

A transmission gear 40a of the PTO clutch 40 engages with the transmission gear 54. The transmission gear 55 and the transmission gear 56 are coupled to each other so as to be integrally rotatable. The transmission gear 55 engages with the transmission gear 54, and the transmission gear 56 engages with the transmission gear 42a, which is coupled to the PTO transmission shaft 42.

The PTO relay gear 57 and the PTO relay gear 58 are coupled to each other so as to be integrally rotatable, and the PTO relay gears 57 and 58 are rotatably attached to the front-wheel transmission shaft 31. The transmission gear 42b coupled to the PTO transmission shaft 42 engages with the PTO relay gear 57.

The transmission gear 59 is rotatably attached to the mid-PTO shaft 29, and the PTO relay gear 58 engages with the transmission gear 59. A shift member 60 is attached to the mid-PTO shaft 29 by a spline structure so as to be able to rotate and slide integrally.

### (Configuration of Transmission System for Transmission to PTO Shaft and Mid-PTO shaft in Transmission Case) - 2

As shown in FIGS. 8, 9, and 12, the motive power of the PTO clutch 40 is transmitted to the center in the left-right direction of the transmission case 6 by the transmission gears 40a of the PTO clutch 40 and the transmission gears 54, 55, and 56, transmitted to the PTO transmission shaft 42, and then transmitted from the PTO transmission shaft 42 to the PTO shaft 28. In this case, the transmission gear 40a of the PTO clutch 40, the transmission gear 42a of the PTO transmission shaft 42, and the transmission gears 54, 55, and 56 are a second transmission mechanism.

In response to the shift member 60 being engaged with the transmission gear 59, the motive power from the PTO transmission shaft 42 is transmitted to the mid-PTO shaft 29 via the transmission gear 42b of the PTO transmission shaft 42, the PTO relay gears 57 and 58, the transmission gear 59, and the shift member 60.

As a result, the PTO clutch 40 is operated to a transmission state and a disengaged state, causing the PTO shaft 28 and the mid-PTO shaft 29 to operate and stop. In response to the shift member 60 being disengaged from the transmission gear 59 in a state where the PTO clutch 40 has been operated to the transmission state, the mid-PTO shaft 29 stops while the PTO shaft 28 is operating.

In the electric tractor, when a work apparatus such as a rotary tilling apparatus (not shown) is attached to the rear portion of the machine body 3, the motive power of the PTO shaft 28 is transmitted to the work apparatus. When a work apparatus such as a mower (not shown) is attached between the front wheels 1 and the rear wheels 2 below the body 3, the motive power of the mid-PTO shaft 29 is transmitted to the work apparatus.

In this case, the PTO clutch 40, the PTO transmission shaft 42, the PTO relay gears 57 and 58, the transmission gear 59, the shift member 60, and the like are a transmission mechanism of a PTO system to the PTO shaft 28 and the mid-PTO shaft 29.

### (Configuration of Hydraulic Pump)

As shown in FIGS. 1, 2, and 8, in the first part 6a and the second part 6b of the transmission case 6, the right part of the first part 6a of the transmission case 6 extends laterally outward to the right relative to the right part of the second part 6b. As a result, the width W1 in the left-right direction of the first part 6a of the transmission case 6 is larger than the width W2 in the left-right direction of the second part 6b of the transmission case 6.

The hydraulic pump 61 is mounted facing rearward on the right part of the first part 6a of the transmission case 6. As a result, the hydraulic pump 61 is provided on the right side, which is the same side as the electric motor 12 in a plan view, with respect to the virtual line L4. The hydraulic pump 61 is provided laterally outward of the right part (the same side as the electric motor 12) of the second part 6b of the transmission case 6, and is provided rearward of the right part (the same side as the electric motor 12) of the rear portion 15 of the housing frame 5.

As shown in FIGS. 8 and 9, the transmission gear 62 and the transmission gear 63 are provided at the right part of the interior of the first part 6a of the transmission case 6. A transmission gear 26a coupled to the input shaft 26 engages with the transmission gear 62, the transmission gear 62 engages with the transmission gear 63, and the transmission gear 63 engages with the input gear 61a of the hydraulic pump 61.

The motive power of the electric motor 12 is transmitted to the hydraulic pump 61 via the transmission gear 26a of the input shaft 26 and the transmission gears 62 and 63, thereby driving the hydraulic pump 61. Since the PTO clutch 40 is provided downstream of the input shaft 26, the hydraulic pump 61 is driven by the electric motor 12 even when the PTO clutch 40 is operated to the disengaged state.

### (Configuration of Filter)

As shown in FIGS. 2 and 8, a lubricating oil outlet (not shown) is open in the left part of the second part 6b of the transmission case 6, and a filter 64 is connected to the outlet.

The filter 64 is provided laterally outward of the left part (the side opposite to the electric motor 12) of the second part 6b of the transmission case 6 and rearward of the left part (the side opposite to the electric motor 12) of the rear portion 15 of the housing frame 5.

As shown in FIGS. 1, 2, and 8, an oil supply passage 74 is connected between the hydraulic pump 61 and the filter 64, and the oil supply passage 74 is provided along the left-right direction above the second part 6b of the transmission case 6.

The lubricating oil of the transmission case 6 passes through the filter 64 and through the oil supply passage 74, and is supplied to the hydraulic pump 61 as the hydraulic fluid. The hydraulic fluid of the hydraulic pump 61 is supplied to a hydraulic device such as a power steering apparatus (not shown) equipped on the electric tractor, and the hydraulic device such as the power steering apparatus operates with use of the supplied hydraulic fluid.

### (Configuration of Front Loader Apparatus)

As shown in FIGS. 1 and 2, the electric tractor is equipped with a front loader apparatus 65, which is a work apparatus, in some cases. The front loader apparatus 65 includes right and left base portions 66, right and left booms 67, a bucket 68, right and left boom cylinders 69, and right and left bucket cylinders 70.

When the front loader apparatus 65 is equipped, a lower portion of the right base portion 66 of the front loader apparatus 65 is coupled to a lateral outer surface of the right attachment portion 23 of the housing frame 5, and a lower portion of the left base portion 66 is coupled to a lateral outer surface of the left attachment portion 23 of the housing frame 5.

With the base portions 66 of the front loader apparatus 65 coupled to the attachment portions 23 of the housing frame 5, a front end portion of a right (left) front-rear frame 73 is coupled to the lateral outer surface of the right (left) base portion 66 of the front loader apparatus 65, and a rear end portion of the right (left) front-rear frame 73 is coupled to the right (left) rear axle case 6d of the transmission case 6.

As a result, the base portion 66 of the front loader apparatus 65 is interposed between the attachment portion 23 and the front end portion of the front-rear frame 73, and the attachment portion 23, the front end portion of the front-rear frame 73, and the base portion 66 of the front loader apparatus 65 are fastened together.

The right front-rear frame 73 is provided laterally outward to the right of the right inverter 24 and laterally outward to the right of the transmission case 6, and is provided laterally outward to the right of the hydraulic pump 61. The left front-rear frame 73 is provided laterally outward to the left of the left inverter 24 and laterally outward to the left of the transmission case 6, and is provided laterally outward to the left of the filter 64.

### (Configuration of Operation of Front Loader Apparatus)

As shown in FIGS. 1 and 2, a control valve unit 71 provided with a plurality of electromagnetically operated control valves is attached to the front portion of the right front-rear frame 73, and a cover 75 covering the control valve unit 71 is attached to the right front-rear frame 73. An oil passage 76 is connected between the hydraulic pump 61 and the control valve unit 71, and the hydraulic fluid of the hydraulic pump 61 is supplied to the control valve unit 71. In this case, the control valve unit 71 is a control valve.

Right and left fenders 77 are provided on the right portion and left portion of the driving section 8, and above the right and left rear wheels 2. An operation lever 72 is provided at the front portion of the upper portion of the right fender 77.

As a result, the operation lever 72 is provided on the right side in a plan view relative to the central portion in the left-right direction of the driving section 8, and is provided on the right side (the same side as the electric motor 12) in a plan view with respect to the center in the left-right direction of the driving section 8. The central portion in the left-right direction of the driving section 8 and the virtual line L4 are at approximately the same position in a plan view.

A position sensor (not shown) for detecting the operation position of the operation lever 72 is provided on the right fender 77, and the control valve of the control valve unit 71 is operated based on the operation of the operation lever 72. In this case, the operation lever 72 is a manual operation tool.

The operator in the driver's seat 34 operates the control valve of the control valve unit 71 by operating the operation lever 72 with his or her right hand. As a result, the hydraulic fluid of the hydraulic pump 61 is supplied to and discharged from the boom cylinder 69 and the bucket cylinder 70 of the front loader apparatus 65 via the control valve unit 71, causing the boom 67 and the bucket 68 of the front loader apparatus 65 to operate.

### (First Alternative Embodiment of the Invention)

The housing frame 5 may be eliminated, and the system may be configured in such a manner that only the flat plate-shaped rear portion 15 (coupling portion) is provided.

According to this configuration, it is preferable that the rear portion 15 (coupling portion) is coupled to the lower portion of the floor 38. The front frame 4 is preferably configured to extend rearward, passing beneath the floor 38, and to be coupled to the transmission case 6, with the rear portion 15 (coupling portion) coupled to the front frame 4.

According to this configuration, the electric motors 11 and 12 are coupled to the front surface of the rear portion 15 (coupling portion), and the transmission case 6 is coupled to the rear surface of the rear portion 15 (coupling portion). The base portion 66 of the front loader apparatus 65 is preferably configured to be coupled to the front frame 4.

### (Second Alternative Embodiment of the Invention)

When the electric motors 11 and 12 are arranged side by side along the left-right direction, the electric motor 11 may be provided on the right and the electric motor 12 may be provided on the left.

According to this configuration, the travel clutch 39 (virtual line L1), the travel relay shaft 43, the transmission 44, and the like are provided to the right of the travel transmission shaft 41 and the PTO transmission shaft 42 in a plan view. The filter 64 is provided to the right of the second part 6b of the transmission case 6.

The PTO clutch 40 (virtual line L2), the transmission gears 54, 55, and 56, and the like, are provided to the left of the travel transmission shaft 41 and the PTO transmission shaft 42 in a plan view. The hydraulic pump 61, the transmission gears 62 and 63, the control valve unit 71, and the like are provided to the left of the second part 6b of the transmission case 6. The operation lever 72 is provided in the driving section 8, at the front portion of the upper portion of the left fender 77.

### (Third Alternative Embodiment of the Invention)

Since the electric motor 12 may require a larger output than the electric motor 11 that generates motive power for traveling, the electric motor 12 may be configured to have a larger output than the electric motor 11.

### (Fourth Alternative Embodiment of the Invention)

The battery 10, the electric motors 11 and 12, and the housing frame 5 may be arranged in such a manner that the rear end portion of the battery 10 is provided slightly rearward of the front end portions of the electric motors 11 and 12.

### (Fifth Alternative Embodiment of the Invention)

In the driving section 8, the operation lever 72 does not necessarily need to be provided on the fender 77.

According to this configuration, the operation lever 72 may be provided to the right or to the left of the steering wheel 33.

### (Sixth Alternative Embodiment of the Invention)

In the control valve unit 71, the control valve may be configured to be mechanically operated instead of electromagnetically operated.

According to this configuration, it is preferable that a mechanical coordination mechanism (not shown) such as a coordination mechanism is connected across the operation lever 72 and the control valve unit 71, and the operation of the operation lever 72 is transmitted to the control valve unit 711 via the coordination mechanism, thereby operating the control valve of the control valve unit 71.

### (Seventh Alternative Embodiment of the Invention)

The front portions of the electric motors 11 and 12 may be coupled to the front portion 14 of the housing frame 5.

According to this configuration, the casings of the electric motors 11 and 12 are part of the housing frame 5, thus improving the rigidity of the housing frame 5.

### (Eighth Alternative Embodiment of the Invention)

If the front loader apparatus 65 is not equipped, the front-rear frames 73 may be coupled between the attachment portion 23 of the housing frame 5 and the rear axle case 6d of the transmission case 6.

### (Ninth Alternative Embodiment of the Invention)

Instead of the rear wheels 2, crawler-type right and left travel apparatuses (not shown) may be attached to the transmission case 6.

The electric tractor may be configured as a hybrid-type electric tractor including an engine (not shown) and the electric motors 11 and 12 as power sources, instead of as an electric tractor including only the electric motors 11 and 12 as power sources.

### (Correspondence with Claims) - 1

With the above configuration, the first electric motor 11 that generates motive power for traveling and the second electric motor 12 that generates motive power for operating an equipped work apparatus (front loader apparatus 65) are included.

The first electric motor 11 and the second electric motor 12 are provided side by side along the left-right direction.

The hydraulic pump 61 that supplies hydraulic fluid to the work apparatus (front loader apparatus 65) is included.

The hydraulic pump 61 is provided on the same side as the second electric motor 12 in a plan view, with respect to a virtual line L4 that passes along the front-rear direction between the first electric motor 11 and the second electric motor 12, and is driven by the second electric motor 12.

A control valve (control valve unit 71) is included, to which the hydraulic fluid of the hydraulic pump 61 is supplied, and which supplies and discharges the hydraulic fluid to and from the equipped work apparatus (front loader apparatus 65).

The control valve (control valve unit 71) is provided on the same side as the second electric motor 12 in a plan view with respect to the virtual line L4.

The driving section 8 to be occupied by the operator is included.

A manual operating tool (operation lever 72) is included, which is operable by the operator in the driving section 8 and operates the control valve (control valve unit 71).

The manual operation tool (operation lever 72) is provided on the same side as the second electric motor 12 in a plan view, with respect to the central portion in the left-right direction of the driving section 8.

The manual operation tool (operation lever 72) is provided on the right side in a plan view relative to the central portion in the left-right direction of the driving section 8.

The second electric motor 12 and the hydraulic pump 61 are provided on the right side in a plan view with respect to the virtual line L4.

### (Correspondence with Claims) - 2

With the above configuration, the transmission case 6 is included, inside of which a transmission mechanism is provided, the motive power of the first electric motor 11 and the second electric motor 12 being transmitted by the transmission mechanism.

The transmission case 6 is provided rearward of the first electric motor 11 and the second electric motor 12.

The hydraulic pump 61 is provided laterally outward of the right portion or the left portion of the transmission case 6 on the same side as the second electric motor 12.

The housing frame 5 is provided, which houses the first electric motor 11 and the second electric motor 12, and has the width W4 in the left-right direction, which is larger than each of the widths W1, W2, and W3 in the left-right direction of the transmission case 6.

The transmission case 6 is coupled to the rear portion 15 of the housing frame 5.

The hydraulic pump 61 is provided rearward of the right part or the left part of the rear portion 15 of the housing frame 5 on the same side as the second electric motor 12.

### (Correspondence with Claims) - 3

With the above configuration, the control valve (control valve unit 71) is included, to which the hydraulic fluid of the hydraulic pump 61 is supplied, and which supplies and discharges the hydraulic fluid to and from the equipped work apparatus (front loader apparatus 65).

The control valve (control valve unit 71) is provided laterally outward of the right portion (right lateral portion 16) or the left portion (left lateral portion 16) of the housing frame 5 on the same side as the second electric motor 12.

The filter 64 is included, which is provided on the right portion (right lateral portion 16) or the left portion (left lateral portion 16) of the transmission case 6 on the side opposite to the second electric motor 12, and is supplied with the lubricating oil stored in the transmission case 6.

The lubricating oil stored in the transmission case 6 is passed through the filter 64 and supplied to the hydraulic pump 61 as the hydraulic fluid.

The filter 64 is provided, which is provided laterally outward of the right portion or the left portion of the transmission case 6 on the side opposite to the second electric motor 12, and is provided rearward of the right part or the left part of the rear portion 15 of the housing frame 5 on the side opposite to the second electric motor 12, and to which the lubricating oil stored in the transmission case 6 is supplied.

The lubricating oil stored in the transmission case 6 is passed through the filter 64 and supplied to the hydraulic pump 61 as the hydraulic fluid.

The oil supply passage 74 is included, which is connected between the filter 64 and the hydraulic pump 61, and supplies the lubricating oil stored in the transmission case 6 to the hydraulic pump 61 as the hydraulic fluid.

The oil supply passage 74 is provided along the left-right direction above the transmission case 6.

### Industrial Applicability

The present invention can be applied to an electric tractor.

### Description of Reference Signs

5 Housing frame
6 Transmission case
8 Driving section
11 Electric motor (first electric motor)
12 Electric motor (second electric motor)
15 Rear portion of housing frame
16 Lateral portion (right portion) (left portion) of housing frame
61 Hydraulic pump
64 Filter
65 Front loader apparatus (work apparatus)
71 Control valve unit (control valve)
72 Operation lever (manual operation tool)
74 Oil supply passage
L4 Virtual line
W1 Width in left-right direction of first part of transmission case (width in left-right direction of transmission case)
W2 Width in left-right direction of second part of transmission case (width in left-right direction of transmission case)
W3 Width in left-right direction of third part of transmission case (width in left-right direction of transmission case)
W4 Width in left-right direction of housing frame

## Claims

1. An electric tractor, comprising:
a first electric motor configured to generate motive power for traveling; and
a second electric motor configured to generate motive power for operating an equipped work apparatus,
wherein the first electric motor and the second electric motor are provided side by side along a left-right direction,
the electric tractor further comprises a hydraulic pump configured to supply hydraulic fluid to the work apparatus, and
the hydraulic pump is provided on the same side as the second electric motor in a plan view, with respect to a virtual line passing in a front-rear direction between the first electric motor and the second electric motor, and is driven by the second electric motor.

2. The electric tractor according to claim 1, further comprising
a control valve to which with the hydraulic fluid of the hydraulic pump is supplied, the control valve being configured to supply and discharge the hydraulic fluid to and from the equipped work apparatus,
wherein the control valve is provided on the same side as the second electric motor in a plan view with respect to the virtual line.

3. The electric tractor according to claim 2, further comprising:
a driving section configured to be occupied by an operator; and
a manual operation tool that is operable by an operator in the driving section and is configured to operate the control valve,
wherein the manual operation tool is provided on the same side as the second electric motor in a plan view with respect to a center portion in the left-right direction of the driving section.

4. The electric tractor according to claim 3,
wherein the manual operation tool is provided on a right side in a plan view with respect to the center portion in the left-right direction of the driving section, and
the second electric motor and the hydraulic pump are provided on the right side in a plan view with respect to the virtual line.

5. The electric tractor according to any one of claims 1 to 4, further comprising
a transmission case inside of which a transmission mechanism is provided, motive power of the first electric motor and the second electric motor being transmitted by the transmission mechanism,
wherein the transmission case is provided rearward of the first electric motor and the second electric motor, and
the hydraulic pump is provided laterally outward of a right portion or a left portion of the transmission case on the same side as the second electric motor.

6. The electric tractor according to claim 5, further comprising:
a housing frame that houses the first electric motor and the second electric motor and has a width in the left-right direction that is larger than a width in the left-right direction of the transmission case,
the transmission case is coupled to a rear portion of the housing frame, and
the hydraulic pump is provided rearward of a right part or a left part of the rear portion of the housing frame on the same side as the second electric motor.

7. The electric tractor according to claim 6, further comprising
a control valve to which the hydraulic fluid of the hydraulic pump is supplied, the control valve being configured to supply and discharge the hydraulic fluid to and from the equipped work apparatus,
wherein the control valve is provided laterally outward of the right portion or the left portion of the housing frame on the same side as the second electric motor.

8. The electric tractor according to any one of claims 5 to 7, further comprising
a filter that is provided laterally outward of the right portion or the left portion of the transmission case on the side opposite to the second electric motor, and to which lubricating oil stored in the transmission case is supplied,
wherein the lubricating oil stored in the transmission case is passed through the filter and supplied to the hydraulic pump as the hydraulic fluid.

9. The electric tractor according to claim 6 or 7, further comprising
a filter that is provided laterally outward of the right portion or the left portion of the transmission case on the side opposite to the second electric motor, and is provided rearward of the right part or the left part of the rear portion of the housing frame on the side opposite to the second electric motor, and to which lubricating oil stored in the transmission case is supplied,
wherein the lubricating oil stored in the transmission case is passed through the filter and supplied to the hydraulic pump as the hydraulic fluid.

10. The electric tractor according to claim 8 or 9, further comprising
an oil supply passage that is connected between the filter and the hydraulic pump and is configured to supply the lubricating oil stored in the transmission case to the hydraulic pump as the hydraulic fluid,
wherein the oil supply passage is provided along the left-right direction above the transmission case.
